Europäisches Patentamt

**European Patent Office**

Office européen des brevets

(11) Numéro de publication: **0 296 908**
A1

# (12) DEMANDE DE BREVET EUROPEEN

(21) Numéro de dépôt: **88401333.5**

(22) Date de dépôt: **02.06.88**

(51) Int. Cl.⁴: **B 62 D 47/00**
B 60 F 5/00, B 62 D 21/00

(30) Priorité: **18.06.87 FR 8708532   20.11.87 US 124379**

(43) Date de publication de la demande:
**28.12.88  Bulletin 88/52**

(84) Etats contractants désignés:
**BE DE ES FR GB NL**

(71) Demandeur: **SOUDURE ET MECANIQUE APPLIQUEES**
**DU VAL NOTRE-DAME société anonyme**
**50 rue de la Fosse-aux-Loups**
**F-95100 Argenteuil (FR)**

(72) Inventeur: **Picard, Didier**
**24 rue Montpensier**
**F-75 001 Paris (FR)**

(74) Mandataire: **Lemoine, Michel et al**
**13 Boulevard des Batignolles**
**F-75008 Paris (FR)**

(54) **Véhicule tout-terrain.**

㊗ Le véhicule, de genre jeep, est formé de façon pratiquement symétrique, notamment par rapport à un plan médian
transversal et comporte, sur un châssis formé de longerons et
traverses (1, 2) respectivement symétriques et formés chaque
fois de deux demi-longerons ou demi-traverses identiques,
deux éléments de caisse longitudinaux symétriques (6) réunis
par un élément transversal (8), la structure présentant des
moyens (6c) pour recevoir et supporter un véhicule identique
superposé.

Fig.1

EP 0 296 908 A1

## Description

### Véhicule tout-terrain.

La présente invention a trait à un véhicule automobile tout-terrain, du genre "jeep", pouvant avoir des applications aussi bien civiles que militaires.

Il existe déjà de nombreux véhicules de ce genre qui, cependant, présentent des inconvénients ou des insuffisances divers.

L'invention se propose de fournir un nouveau véhicule tout-terrain qui soit aérotransportable dans des conditions améliorées tout en étant simple et économique.

Un autre objectif de l'invention est de fournir un tel véhicule facile à fabriquer par des entités industrielles réduites, sous la réserve d'utiliser des ensembles complexes déjà existants, tels que chaîne cinématique, amortisseurs, ensemble de direction.

Un autre objectif de l'invention est de fournir un tel véhicule d'entretien et de réparation faciles et dont la logistique se trouve simplifiée, notamment du point de vue de la fabrication et du stockage de pièces détachées.

Un autre objectif de l'invention est de réaliser un tel véhicule de grande capacité de transport bien que de longueur réduite.

Un autre objectif encore de l'invention est de fournir un véhicule particulièrement pratique tant au point de vue du roulage et de la tenue de route, notamment en terrain libre, que des conditions de transport, chargement et déchargement de personnes et de charges.

L'invention a pour objet un véhicule tout terrain, du genre jeep, du type à deux essieux avec une caisse ou coque, comportant des moyens pour recevoir par superposition un autre véhicule identique, caractérisé en ce que la caisse ou coque, réalisée de façon pratiquement symétrique en longueur, comporte deux éléments longitudinaux qui présentent une partie centrale déprimée correspondant aux passages de passagers avant et arrière, située entre deux parties obliques vers le haut, de préférence selon un angle de l'ordre de 60°, puis deux parties extrêmes planes surmontant les roues et susceptibles de recevoir les roues du véhicule superposé.

Le véhicule selon l'invention est, de préférence, du type à caisse et châssis, mais peut être également un véhicule de type monocoque porteuse comportant lesdits moyens recevant un autre véhicule par superposition.

De façon avantageuse, la caisse ou coque présente, au-dessus de chaque roue, une surface de réception, de préférence plane, supportant la roue correspondante du véhicule superposé, des moyens d'arrimage, par exemple des sangles, empêchant la séparation des deux véhicules.

On peut ainsi aérotransporter les véhicules par groupes de deux véhicules superposés, ce qui augmente considérablement la capacité de remplissage des avions transporteurs.

La structure du véhicule est conçue pour supporter la charge du véhicule superposé, au moins pour une accélération de 2 g, au moment de l'atterrissage. En transport terrestre ou maritime, on pourra, dans la pratique, superposer trois véhicules.

Conformément à l'invention, le véhicule est réalisé, au niveau châssis et caisse, de façon pratiquement symétrique en longueur, facilitant les possibilités de superposition.

Ainsi la caisse ou coque peut avantageusement comporter deux éléments longitudinaux, disposés latéralement, autoporteurs, et formant les logements des roues d'un même côté et les surfaces de support des deux roues correspondantes du véhicule superposé. Ces éléments longitudinaux peuvent avantageusement être mécano-soudés notamment sur la base d'un ou plusieurs profilés coudés. Ils présentent de préférence une zone centrale déprimée correspondant au passage des passagers avant et arrière, située entre mieux parties obliques vers le haut, selon un angle de préférence de l'ordre de 60°, puis deux parties extrêmes planes, surmontant les roues et parallèles à la partie centrale déprimée, bien que ces parties puissent également être, au moins partiellement, inclinées vers le haut et l'extrémité, pour s'opposer alors à la possibilité d'un déplacement longitudinal du véhicule superposé.

Ces éléments sont de préférence portés par un châssis composé de deux longerons et de deux traverses extrêmes, avec des bras cantilever en positions médianes.

De préférence, le ou les profils coudés structurant l'élément longitudinal présentent ainsi une zone centrale horizontale abaissée, et, de part et d'autre, deux parties obliques vers le haut, suivies d'une partie horizontale au droit des roues, puis chaque fois d'une partie oblique vers le bas, venant s'appuyer, de préférence, sur les extrémités des traverses du châssis

Les longerons présentent alors une forme symétrique adaptée aux éléments et au passage des ponts avant et arrière. Ils peuvent très avantageusement être constitués chacun de deux demi-longerons identiques, à section en C, emboîtés et soudés l'un le long de l'autre pour former un longeron tubulaire, ce qui permet de ne fabriquer qu'un seul type de demi-longeron à la presse pour former les deux longerons.

Les traverses peuvent également être formées à partir de demi-traverses à section en C, avec les mêmes avantages.

Des pattes latérales, s'étendant depuis la partie centrale des longerons, peuvent également être prévues identiques entre elles.

Différentes autres pièces peuvent être identiques entre elles et notamment les bras ou crosses longitudinaux de suspension et les pots de suspension. Chaque essieu peut aussi être associé à une barre du type Panhard.

De préférence, les deux éléments longitudinaux de caisse ou coque peuvent être réunis par un élément transversal, en forme de caisson allongé mécanosoudé, fixé sur les éléments longitudinaux, de préférence au niveau de l'une des parties obliques d'élément longitudinal, ce qui permet de rigidifier encore la caisse et en même temps de former un panneau recevant des éléments de tableau de bord, le pare-brise et le capot. Cet élément est facilement démontable et permet d'accéder au moteur et à ses organes de servitude.

A l'arrière, des planchers peuvent réunir les deux éléments longitudinaux. Un hayon arrière et une calandre avant peuvent aussi être utilisés pour relier les deux éléments longitudinaux.

De préférence, les différents éléments, tels que longerons, traverses, éléments longitudinaux de caisse, élément transversal, et autres, peuvent être assemblés par un assemblage séparable, tel que pitons, boulons, goujons et écrous facilitant le remplacement rapide d'un élément. Certaines liaisons, notamment entre châssis et caisse, peuvent avoir un certain degré de liberté.

Le groupe motopropulseur est logé, par exemple à l'avant, entre les deux éléments longitudinaux, et au-dessus du pont avant, l'espace ainsi déterminé étant long et facilement accessible par le haut, le bas, l'avant et l'arrière, de sorte que différents groupes motopropulseurs usuels peuvent être montés, tels que ceux de Land Rover, Toyota, Peugeot P4, Mercedes G etc...

L'élément transversal peut être ajusté à toute hauteur voulue pour s'adapter au moteur particulier choisi.

On conçoit qu'un véhicule ainsi réalisé soit facile à fabriquer et à réparer, à l'aide de moyens peu complexes.

D'autres avantages et caractéristiques de l'invention apparaîtront à la lecture de la description suivante, faite à titre d'exemple non limitatif et se référant au dessin annexé, dans lequel :

la figure 1 représente une vue schématique en élévation du véhicule selon l'invention,

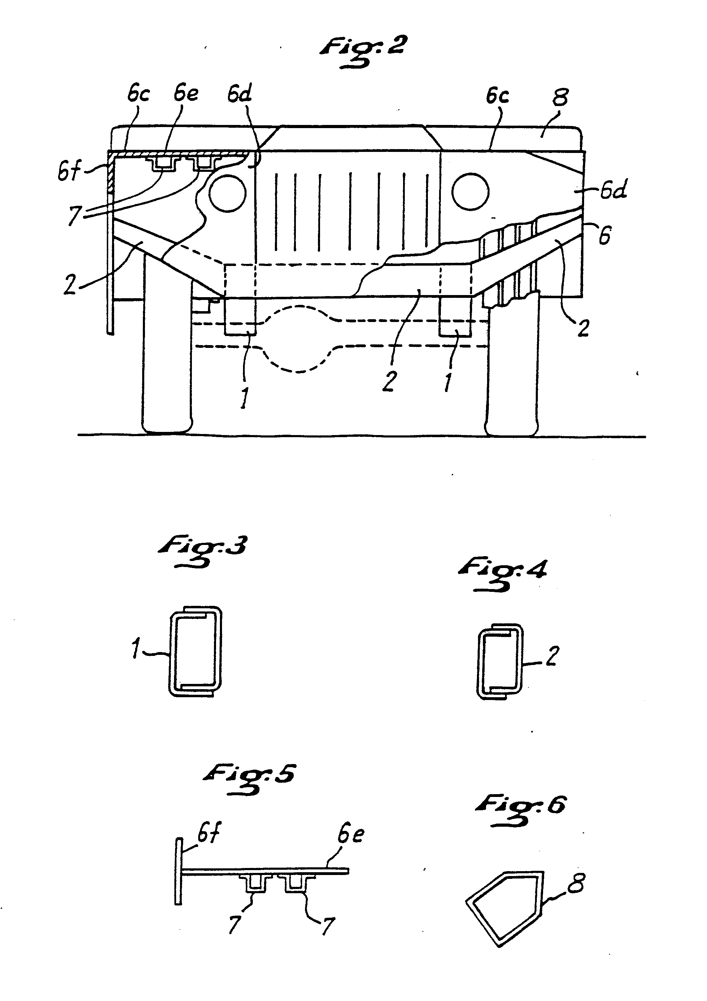

la figure 2 représente une vue de devant,

les figures 3 à 6 représentent une vue schématique en coupe d'un longeron, d'une traverse, d'un élément longitudinal et d'un élément transversal,

la figure 7 représente une vue schématique en élévation d'une variante du véhicule.

Le châssis est constitué de deux longerons 1 centralement rectilignes et déportés vers le haut vers les extrémités. Chaque longeron est formé de deux demi-longerons 1a, s'étendant sur toute la longueur, emboîtés et soudés le long l'un de l'autre sur les ailes supérieure et inférieure. Quatre demi-longerons 1a identiques, obtenus par déformation d'un profilé en C à la presse, permettent de faire les deux longerons tubulaires.

Les traverses tubulaires principales 2 sont centralement rectilignes et obliques aux deux extrémités, et formées de la même façon à partir de demi-traverses 2a, toutes identiques entre elles, emboîtées et soudées l'une le long de l'autre. Ces traverses sont également obtenues l'aide d'un seul outil, à la presse.

Les deux traverses 2 sont soudées aux extrémités des longerons, leurs bras obliques dépassant le cadre ainsi formé, pour structurer la caisse.

Sur chaque longeron 1 s'étendent, vers l'extérieur, deux pattes 3, soudées, à section en oméga, ainsi que des ferrures 4 servant à l'articulation des bras ou crosses 5 de suspension. Pattes, ferrures et bras sont tous respectivement identiques entre eux.

Sur chaque longeron 1, on vient monter un élément longitudinal de caisse 6, mécano-soudé autour de deux profilés en oméga, 7, parallèles entre eux. L'élément longitudinal 6 présente, de même que ses profilés 7, une partie centrale rectiligne abaissée 6a, deux parties obliques 6b et deux parties extrêmes 6c, le tout étant, comme les longerons, symétrique par rapport à un plan transversal médian du véhicule. Les profilés 7 suivent ce trajet. L'élément transversal comporte une tôle pliée 6e supportée par les profilés 7 et une joue découpée verticale 6f. Les éléments longitudinaux 6 sont montés et boulonnés sur les bras 3, qui portent leurs profilés 7, et sur les traverses 2 vers les extrémités de l'élément 6.

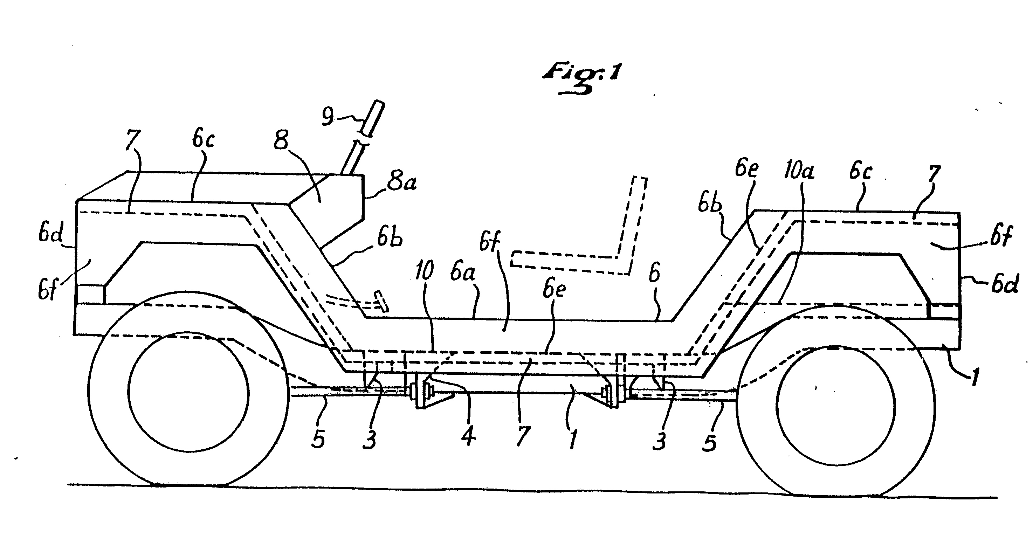

Un élément transversal en caisson 8, dont la section se distingue sur la figure 1, est fixé sur les parties obliques antérieures 6b, réunissant ainsi les deux éléments 6. L'élément 8 présente une partie arrière verticale 8a pour recevoir des éléments de tableau de bord, une partie supérieure horizontale recevant le pare-brise 9 et une partie oblique recevant le capot.

Les éléments longitudinaux 6 sont refermés à leurs extrémités avant et arrière par des panneaux transversaux 6d qui raidissent l'élément à ses deux extrémités et reçoivent les feux. Un tel élément 6, rigidifié par la structure et par la présence de ces deux profils internes en omega 7, forme, au-dessus des roues, les deux surfaces 6c sur lesquelles peuvent reposer les roues d'un véhicule identique que l'on viendrait superposer, et ceci avec une résistance suffisante, y compris pour un atterrissage à 2g.

Les deux éléments 6 se trouvent encore reliés par des plaques servant de plancher 10, et de plateforme arrière 10a, ces plaques pouvant elle-mêmes être supportées par de petits profilés en oméga dont les extrémités seraient fixées ou soudées contre les éléments longitudinaux. Les plaques 10, 10a sont fixées à la tôle 6e.

En se référant à la figure 7, on voit une variante dans laquelle les profilés en oméga 7 possédent des parties extrêmes 7a qui suivent les parties horizontales surélevées au niveau des parties 6c et qui sont inclinées vers le bas pour rejoindre les traverses 2.

L'ensemble forme donc une structure très cohérente, avec d'une part le châssis formé par les deux longerons 1 avec leurs deux traverses 2 qui les relient leurs deux extrémités avant et arrière, formant ainsi un cadre sur lequel se trouve fixée, avec possibilité de dépose rapide, la caisse structurée autour des deux éléments longitudinaux 6 reliés entre eux par l'élément transversal 8, par les plancher et plateforme 10, 10a et, accessoirement par la calandre antérieure et un hayon arrière.

Le véhicule ainsi constitué présente une grande maniabilité et une excellente tenue de route.

## Revendications

1. Véhicule tout terrain, du genre jeep, du type à deux essieux avec une caisse ou coque, comportant des moyens pour recevoir par superposition, un autre véhicule identique, caractérisé en ce que la caisse ou coque, réalisée de façon pratiquement symétrique en longueur comporte deux éléments longitudinaux (6) qui présentent une partie centrale déprimée (6a) correspondant aux passages de passagers avant et arrière, située entre deux parties obliques vers le haut (6b), de préférence selon un angle de l'ordre de 60°, puis deux parties extrêmes planes (6c) sur montant les roues et susceptibles de recevoir les roues du véhicule superposé.

2. Véhicule selon la revendication 1, caractérisé en ce que lesdits deux éléments longitudinaux (6) comportent un ou plusieurs profilés, notamment en omega, convenablement coudés, supportant une tôle pliée (6e) à laquelle est fixée une joue verticale (6f).

3. Véhicule selon la revendication 2, caractérisé en ce que lesdits profilés présentent des parties extrêmes (7a) qui suivent les parties extrêmes planes (6c) et se dirigent obliquement vers le bas pour rejoindre des traverses.

4. Véhicule selon l'une quelconque des revendications 1 à 3, caractérisé en ce qu'il comporte un châssis avec deux longerons symétriques en longueur.

5. Véhicule selon l'une quelconque des revendications 1 à 4, caractérisé en ce que le châssis comporte deux traverses identiques.

6. Véhicule selon l'une quelconque des revendications 4 et 5, caractérisé en ce que les longerons (1) et/ou les traverses (2) sont formées de demi-longerons ou demi-traverses à section en C, emboîtés et soudés le long l'un de l'autre, pour former un élément tubulaire, une seule forme de demi-longeron et/ou demi-traverse suffisant pour le châssis.

7. Véhicule selon l'une quelconque des revendications précédentes, caractérisé en ce que des bras ou crosses avant et arrière (5), des pots de suspension avant et arriére, et/ou des pattes de support latérales (3) s'étendant du châssis, sont tous respectivement identiques entre eux.

8. Véhicule selon l'une quelconque des revendications précédentes, caractérisé en ce qu'il comporte un élément transversal (8) reliant les deux éléments longitudinaux (6) et présentant une surface pour recevoir des éléments de tableau de bord.

9. Véhicule selon l'une quelconque des revendications précédentes, caractérisé en ce que le groupe moto-propulseur est monté entre les deux éléments longitudinaux (6) à l'avant du véhicule.

10. Véhicule selon l'une quelconque des revendications 4 à 9, caractérisé en ce que les éléments de caisse sont fixés sur le châssis par des moyens permettant un assemblage rapidement séparable.

*Fig.1*

0296908

*Fig.2*

*Fig.3*

*Fig.4*

*Fig.5*

*Fig.6*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 463 310  (K.K. PROBST)<br>* Figures 1,2; colonne 1, lignes 4-20; colonne 2, lignes 1-19; colonne 3, lignes 38-51; colonne 4, ligne 58 - colonne 5, ligne 3 *<br>--- | 1,4,5,7,9,10 | B 62 D  47/00<br>B 60 F   5/00<br>B 62 D  21/00 |
| A | DE-A-2 834 178  (M. SOMERTON-RAYNER)<br>* Figures 1-3; page 6, paragraphe 1 - page 7, paragraphe 2; page 11, dernier paragraphe - page 12, paragraphe 1 *<br>--- | 1,4,5 | |
| A | DE-B-1 284 856  (MASCHINENFABRIK FAHR AG)<br>* En entier *<br>--- | 1,4,5,9 | |
| A | DE-A-3 525 251  (INGENIEURBÜRO ANDREAS TREUGUT)<br>* Figures 1-3; colonne 5, ligne 16 - colonne 7, ligne 26 *<br>----- | 1,4,5,8,9 | |

| | | | DOMAINES TECHNIQUES RECHERCHES (Int. Cl.4) |
|---|---|---|---|
| | | | B 62 D<br>B 60 F |

Le présent rapport a été établi pour toutes les revendications

| Lieu de la recherche | Date d'achèvement de la recherche | Examinateur |
|---|---|---|
| LA HAYE | 21-09-1988 | CHLOSTA P. |

EPO FORM 1503 03.82 (P0402)